# EUROPEAN PATENT SPECIFICATION

(11) **EP 3 459 789 B1**
(45) Date of publication and mention of the grant of the patent: **25.11.2020**
(21) Application number: 18186097.4
(22) Date of filing: 27.07.2018
(51) Int. Cl.: B60P 7/00, B60P 7/15

(54) **A PLATFORM AND A RETAINING SYSTEM FOR TRANSPORT VEHICLES**
PLATTFORM UND RÜCKHALTESYSTEM FÜR TRANSPORTFAHRZEUGE
PLATEFORME ET SYSTÈME DE RETENUE POUR VÉHICULES DE TRANSPORT

(30) Priority: 21.09.2017 IT 201700105822
(43) Date of publication of application: 27.03.2019
(73) Proprietor: Fami S.R.L., 36027 Rosà (VI) (IT)
(72) Inventor: MILANI, Luca, 36028 ROSSANO VENETO (VICENZA) (IT)
(74) Representative: Paparo, Aldo

(56) References cited:
- EP-A1- 2 216 203
- FR-A1- 2 894 902
- US-A- 3 698 677

## Description

The present invention relates to a platform to be installed on a loading plane of a transport vehicle.

The present invention further relates to a retaining system for transport vehicles.

Platforms are known on which retaining devices and anchoring devices are installed for the purpose of creating application points for telescopic cargo bars Document EP 2 216 203 A1 discloses a platform according to the preamble of claim 1.

Telescopic cargo bars mean elongated elements, most commonly, poles which, appropriately arranged inside a loading compartment of a transport vehicle (such as, for example, a van or lorry), allow retaining points to be defined for blocking pallets/packages/containers housed inside the compartment itself in order to define sufficient stability thereof during transport.

A first example of an anchoring device known in the state of the art envisages the application of shaped bars, with a plurality of anchoring openings, connected to the platform and projecting from the plane of the platform applied to the vehicle.

A second example of a known anchoring device in the state of the art comprises a metal plate applied to the bottom of the vehicle platform and passing through a through opening performed on the platform so as to expose at the top a plurality of anchoring openings.

The solutions summarised above imply various disadvantages.

With particular reference to the first example of the prior art, the anchoring device has undesired encumbrances connected with the parts projecting from the platform. The aforementioned parts tend to inhibit, during the loading and/or unloading steps, any sliding of the loads on the platform. More generally, the aforementioned projecting parts are an obstacle to the operator during loading and unloading operations.

With reference to the second example of the prior art, it is noted how it has high implementation costs because of performing a suitable milling on the lower surface of the platform on which a peripheral flange of the metal plate is fixed through threaded connections. The millings, adapted to house the aforementioned devices, imply the weakening of the section of the platform.

Additionally, such systems have reduced flexibility of use as the bar conformation of the plate does not allow particular positions of the anchoring openings, which due to their linear extension can only extend in rows.

Also the thickness of the bar of the plate does not allow application on reduced platform thicknesses.

Finally, the assembly of the metal plate mentioned in the second example, does not allow the installation on platforms already assembled on vehicles. The technical task of the present invention is therefore to propose a platform and a retaining system for transport vehicles that enables the drawbacks that have emerged from the prior art to be overcome.

The object of the present invention is therefore to provide a platform and a retaining system for transport vehicles that is flexible and free from encumbrances (i.e. not projecting with respect to the loading plane of the platform).

A further object of the present invention is therefore to provide a platform and a retaining system for transport vehicles that is easy to install and inexpensive.

Again, a further object of the present invention is to provide a platform and a retaining system for transport vehicles with a flexibility such as to be able to be installed on platforms already installed on vehicles.

The set technical task and aims are substantially attained by a platform and a retaining system for transport vehicles, comprising the characteristics set out in one or more of the appended claims.

Further characteristics and advantages of the present invention will become more apparent from the indicative and thus non-limiting description of an embodiment of a platform and a retaining system for transport vehicles.

Such description will be set out below with reference to the attached drawings, provided solely for indicative and therefore non-limiting purposes, in which:
- Figure 1 is a lateral section of the platform according to the present invention according to one embodiment thereof;
- Figure 2 is an alternative embodiment of the platform according to the present invention;
- Figure 3 is a perspective view of a retaining system according to the present invention;
- Figure 4 is an exploded view of the retaining system of figure 2;
- Figure 5 is a detail of elements of the retaining system of figure 2 compared with each other;
- Figure 6 is a schematic representation of the retaining system according to the present invention when installed in a transport vehicle.

With reference to the appended figures, 1 indicates overall a platform to be installed on a loading plane "C" of a transport vehicle and that, for simplicity purposes, will be indicated below as platform 1.

Platform 1 comprises a sheet-like element 2 that rests on the loading plane "C" and has a plurality of holes 3.

Preferably, the sheet-like element 2 is shaped like a flat board and is made of wood, so that holes 3 can be made in the event that the sheet-like element has already been installed on the loading plane "C".

Preferably, the sheet-like element 2 has a thickness "s" comprised between 8 and 18 millimetres. Even more preferably, the sheet-like element 2 has a thickness "s" of 9 millimetres.

Preferably, the holes 3 have a depth "p" less than or equal to the thickness "s" of the sheet-like element 3 (in this case we talk about through holes).

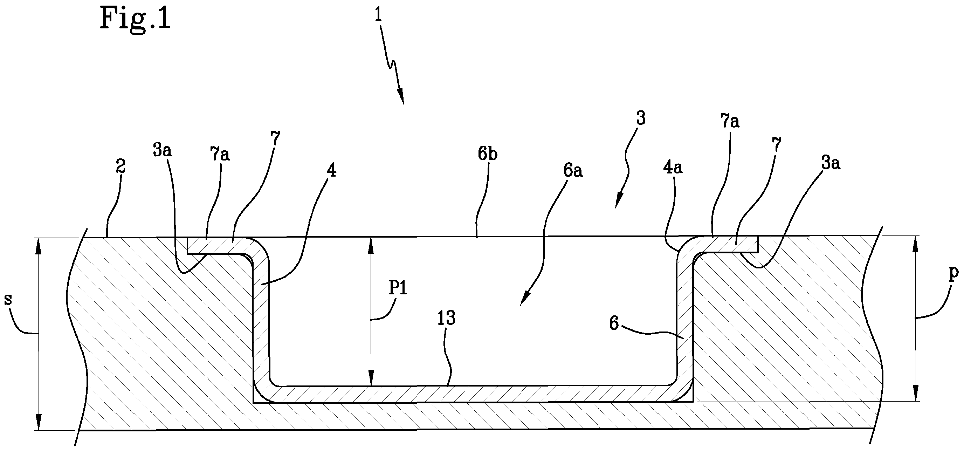

In figure 1, the holes 3 have been made so as to have a depth "p" less than the thickness "s" of the sheet-like element; in this case the depth "p" is preferably comprised between 5 and 12 millimetres. Even more preferably, in the case of depth "p" being less than the thickness "s", the holes 3 have a depth "p" of 8 millimetres.

The holes 3 are arranged according to a predefined distribution.

Predefined distribution means a placement of the holes 3 established according to production requirements or the customer's use requirements. The way in which the holes 3 are positioned will be clarified in the following description.

Platform 1 further comprises, for each hole 3, a relative cup-shaped element 4 in which an end part 5a of a telescopic cargo bar 5 can be fitted. In particular, the cup-shaped element 4 comprises a main body 6 defining a receiving portion 6a (in which the end part 5a of the telescopic cargo bar 5 can be fitted).

Preferably, the receiving portion 6a of each cup-shaped element 4 is accessible from an upper mouth 6b of the cup-shaped element 4 itself. The cup-shaped element 4 further comprises a peripheral portion 7 that extends transversally to the main body 6 and is adapted to define a stopping abutment upon inserting the cup-shaped element 4 in the respective hole 3 through the upper mouth 6b.

Preferably the cup-shaped element 4 is made of stainless steel or galvanised steel, so as to prevent the formation of rust deriving from the end part 5a of the telescopic cargo bar 5 possibly striking on the cup-shaped element (which will be described in the following paragraphs of the present invention).

Preferably, the peripheral portion 7 is located in an upper portion 4a of the cup-shaped element 4 ("upper" is defined with reference to the use configuration shown in the appended figures).

Preferably, the peripheral portion 7 of each cup-shaped element 4 defines an outwards extension and in particular perpendicular to the axis of extension of the cup-shaped element 4 (therefore along the surface of the sheet-like element 2), of the main body 6 at the upper mouth 6b.

Preferably, the cup-shaped element 4 is coupled by interference to the respective hole 3 or is glued thereto.

Preferably, the cup-shaped element 4 can have its main body 6 coupled by interference to the inside of a corresponding milling 3a of the hole 3. Alternatively, the cup-shaped element 4 can have at least its bottom glued onto the bottom of the hole 3.

Again, the peripheral portion 7 can alternatively have interlocking teeth, not shown in the appended figures, adapted to be engaged inside the space of the milling 3a of the hole 3.

The holes 3 are counter-shaped with respect to the cup-shaped element 4 (whether the depth "p" of the hole 3 is less than the thickness "s" or equal to it). In this way the cup-shaped element 4 has analogous dimensions to those of the hole 3.

In this context, the peripheral portion 7 is preferably housed in a corresponding milling 3a of the respective hole 3.

Preferably, the cup-shaped elements 4 are fitted in a concealed way into the respective holes 3. In this way the cup-shaped element 4 disappears into the sheet-like element 2 and therefore does not emerge partially therefrom.

The holes 3 are counter-shaped with respect to the cup-shaped elements 4 so that the cup-shaped elements 4 are fitted into the respective holes 3 in a configuration in which the peripheral portion 7 is flush with the upper surface of the sheet-like element 2. Preferably, the holes 3 (and accordingly each cup-shaped element 4) have an axisymmetric shape, i.e. a circular section. In particular, the peripheral element 7 of the cup-shaped element 4 is made in the shape of an annular flange 7a.

In the appended figures, the cup-shaped element 4 performs the task of allowing the engagement of the telescopic cargo bar 5 but also of protecting the sheet-like element 2 by absorbing the pressure of the telescopic cargo bar 5 itself.

The holes 3 are positioned so that the telescopic bars 5 can be positioned in specific positions in order to be able to retain the load (such as for example pallets/packages/containers of various kinds) to be transported inside the loading compartment of a transport vehicle.

Advantageously, the holes 3, inside which the cup-shaped elements 4 are positioned, make it possible to not create encumbrances such as in the case of devices of the prior art and in fact provide greater flexibility in the possible configurations inside the loading compartment of the transport vehicle.

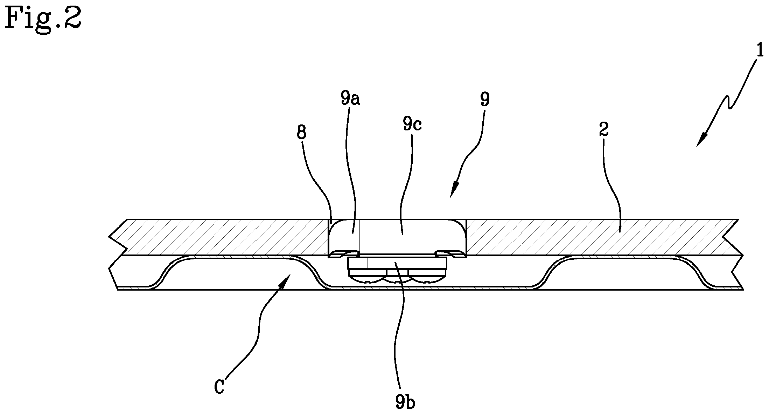

Preferably, the platform 1 according to the present invention can comprise at least one additional hole 8 passing through the entire thickness "s" of the sheet-like element 2. The additional hole 8 can be associated with a respective anchoring device 9 (shown in figure 2) applicable to the lower surface 2a of the sheet-like element.

In this embodiment, the additional hole 8 alternates with a series of holes 3 provided with respective cup-shaped elements 4.

The anchoring devices 9, which may be of the known type, comprise a central body 9a and at least two finned portions 9b. The central body 9a has at least one opening 9c through which the end part 5a of the telescopic cargo bar 5 can be fitted.

The two finned portions 9b are solidly constrained to the central body 9a and are configured to make the anchoring device 9 fixable to the sheet-like element 2. The two finned portions 9b are arranged in opposite portions of the central body 9a of the anchoring device 9.

This alternative embodiment of the platform 1 according to the present invention can be fitted onto a loading plane "C" having a corrugated profile.

In this embodiment, the sheet-like element 2 rests on the loading plane "C" at raised portions (ribs) of the corrugated profile and the additional holes 8 are realised in at least one recess or a protuberance of the corrugated profile.

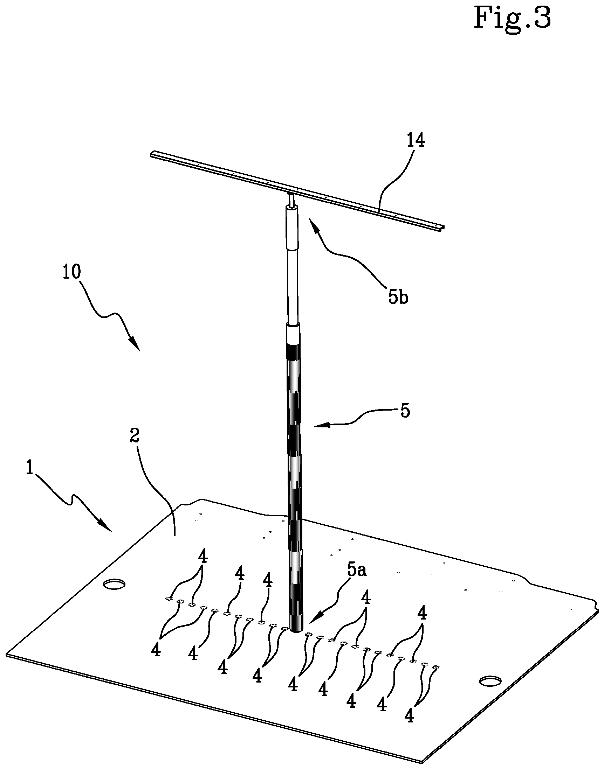

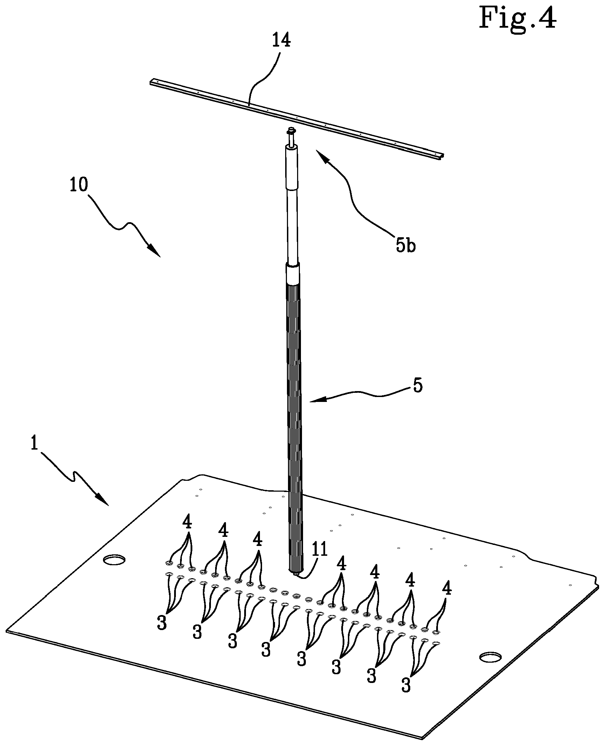

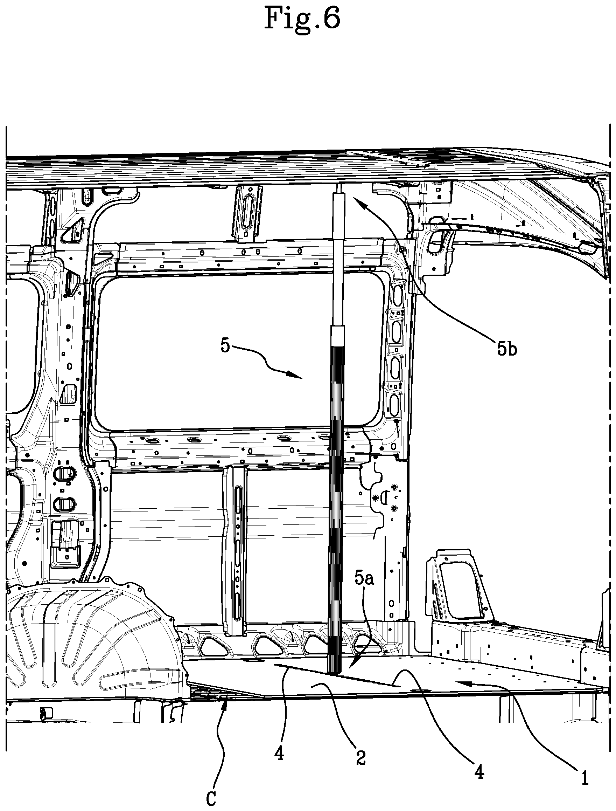

The present invention further relates to a retaining system 10 (shown in figures 3 to 6) for transport vehicles comprising the platform 1 as previously described.

The retaining system 10 further comprises at least one telescopic cargo bar 5 (the number is variable based on the load to be transported in the loading compartment of the transport vehicle) comprising the end part 5a configured to be coupled to the respective cup-shaped element 4.

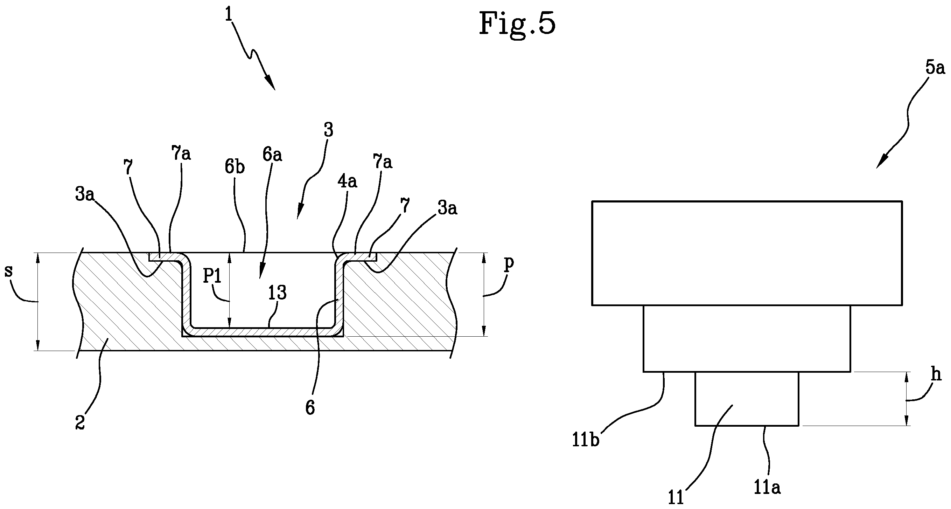

The end part 5a has a section reduction (as shown in figure 5 in which it is realised in the form of a plurality of cylindrical portions with decreasing diameters, following the representation in the figure, from top to bottom) defining a lower shoulder 11b from which a locking projection 11 protrudes. In this way the end part 5a can be coupled to the respective cup-shaped element 4.

In particular, the end part 5a can be coupled to the respective cup-shaped element 4 by resting a free end 11a of the locking projection 11 against a bottom surface 13 of the receiving portion 6a of the cup-shaped element 4. In this configuration, preferably, the locking projection 11 is defined by a plug having a height "h" that is greater than a depth "p1" of the receiving portion 6a. In this embodiment the free end 11a of the locking projection 11 rests against the bottom surface 13 of the receiving portion 6a of the cup-shaped element 4. In this way the telescopic cargo bar 5 strikes against the bottom surface 13 of the cup-shaped element 4 that absorbs the weight of the telescopic cargo bar 5 itself.

Alternatively, the end part 5a can be coupled to the respective cup-shaped element 4 by resting the shoulder 11b against an upper surface 7a of the cup-shaped element 4 with the simultaneous insertion of the locking projection 11 into the receiving portion 6a. In this configuration, preferably, the locking projection 11 is defined by a plug having a height "h" which is less than the depth "p1" of the receiving portion 6a. In this embodiment the shoulder 11b abuts against the upper surface 7a of the cup-shaped element 4 with the simultaneous insertion of the locking projection 11 in the receiving portion 6a. In this way the telescopic cargo bar 5 hits the peripheral portion 7 which absorbs its weight.

Preferably, in a further embodiment, the locking projection 11 is defined by a plug having a height "h" that is equal to the depth "p1" of the receiving portion 6a. In this embodiment the end part 5a rests against the cup-shaped element 4 through both the free end 11a (that rests against the bottom surface 13) and the shoulder 11b (that abuts against the upper surface 7a).

The retaining system 10 further comprises at least one upper bar 14 or another similar anchoring system, to be installed on a ceiling of the transport vehicle, configured to fit a further end part 5b, opposite the end part 5a, of the telescopic cargo bar 5.

The upper bar 14 can be installed on the ceiling of the transport vehicle where the holes 3 of the platform 1 are applied. The upper bar comprises housing seats for the further end part 5b so as to facilitate the fixing of the telescopic cargo bar 5.

In the appended figures, a fixing system 10 is shown wherein the holes 3 with the related cups 4 are positioned along a straight line and wherein the upper bar 14 is located parallel to the straight line so as to allow different positionings of the telescopic cargo bar 5 in relation to the number of holes 3.

In an alternative embodiment (not shown), the retaining system 10 comprises the platform 1 shown in figure 2 comprising at least one additional hole 8. In this embodiment the end part is inserted in the opening 9c of the central body 9a so that the shoulder 11b rests on the central body 9a, hence discharging the weight of the telescopic cargo bar 5 thereon.

The platform 1 and the retaining system 10 described above allow the drawbacks emerged from the prior art to be overcome.

Advantageously, the platform 1 and the retaining system 10 are particularly flexible and the use of the holes 3 in which the cup-shaped elements 4 are contained allows the encumbrance of the devices present in the prior art to be eliminated.

Advantageously, the platform 1 and the retaining system 10 are easy to install and inexpensive. Furthermore, even with the platform already installed, the addition of new holes 3 with cup-shaped elements 4 and upper bars 14 is immediate and quick, hence reducing operating times and the related costs.

Even more advantageously, the platform 1 additionally allows further anchoring devices 9 of the prior art to be received, and prevents difficult processing and lengthy replacement times so as to be able to obtain different configurations thanks to the presence of the holes 3 and the cup-shaped elements 4.

## Claims

1. A platform (1) to be installed on a loading plane (C) of a transport vehicle, comprising a sheet-like element (2) adapted to rest on said loading plane (C) and having a plurality of holes (3) arranged according to a predetermined distribution, said platform (1) further comprising, for each hole (3), a relative cup-shaped element (4) comprising a main body (6) defining a receiving portion (6a), in which an end part (5a) of a telescopic cargo bar (5) can be fitted, and a peripheral portion (7) extending transversally to the main body (6) and adapted to define a stopping abutment upon inserting the cup-shaped element (4) in the respective hole (3),
wherein said holes (3) are counter-shaped with respect to respective cup-shaped elements (4), **characterized in that** said cup-shaped elements (4) are fitted into the respective holes (3) so that the most external part of the cup-shaped elements (4) is flush with the outer surface of the sheet-like element (2).

2. The platform (1) according to claim 1, wherein said holes (3) have a depth (p) less than or equal to a thickness (s) of said sheet-like element (2).

3. The platform (1) according to claim 1 or 2, wherein said peripheral element (7) is located in an upper portion of said cup-shaped element (4), said cup-shaped element being bonded or coupled by interference to the respective hole (3).

4. The platform (1) according to one or more of the preceding claims, wherein the receiving portion of each cup-shaped element (4) is accessible from an upper mouth (6b) of the cup-shaped element (4) and wherein the peripheral portion (7) of each cup-shaped element (4) defines an outwards extension of the main body (6) at said upper mouth (6b); said peripheral portion (7) being preferably housed inside a corresponding milling (3a) of said respective hole (3).

5. The platform (1) according to one or more of the preceding claims, wherein said holes (3) and each cup-shaped element (4) have a circular section, and wherein said peripheral portion (7) is made in the shape of an annular flange.

6. The platform (1) according to one or more of the preceding claims, comprising at least one additional hole (8), passing through the entire thickness of the sheet-like element (2) and that can be associated with a respective anchoring device (9) applicable to the lower surface of the sheet-like element (2).

7. A retaining system (10) for transport vehicles, comprising:
- a platform (1) according to one or more of the preceding claims;
- at least one telescopic cargo bar (5) comprising its own end part (5a) configured to be coupled to a respective cup-shaped element (4), said end part (5a) having a section reduction defining a lower shoulder (11b) from which a locking projection (11) protrudes, so that said end part (5a) can be coupled to the respective cup-shaped element (4) through:
- resting the free end (11a) of said locking projection (11) against a bottom surface (13) of the receiving portion (6a) of the cup-shaped element (4) and/or
- resting said shoulder (11b) against an upper surface (7a) of said cup-shaped element (4) and simultaneously inserting the locking projection (11) into said receiving portion (6a).

8. The retaining system (10) according to claim 7, wherein said locking projection (11) is defined by a plug having a height (h) that is greater than a depth (p1) of the receiving portion (6a) so that the free end (11a) of said locking projection (11) rests against the bottom surface (13) of the receiving portion (6a) of the cup-shaped element (4).

9. The retaining system (10) according to claim 7, wherein said locking projection is defined by a plug (12a) having a height (h) that is less than a depth (p1) of the receiving portion (6a) so that said shoulder (11b) abuts against the upper surface of the cup-shaped element (4) with the simultaneous insertion of the locking projection (11) in the receiving portion (6a).

## Patentansprüche

1. Plattform (1), die auf einer Ladeebene (C) eines Transportfahrzeugs installiert werden soll, umfassend ein blattartiges Element (2), das so ausgelegt ist, dass es auf der Ladeebene (C) aufliegt, und eine Vielzahl an Löchern (3) aufweist, die entsprechend einer vorbestimmten Verteilung angeordnet sind, wobei die Plattform (1) ferner für ein jedes Loch (3) ein relatives becherförmiges Element (4) umfasst, das einen Hauptkörper (6) umfasst, der einen Aufnahmeabschnitt (6a) definiert, in dem ein Endteil (5a) einer Teleskop-Sperrstange (5) eingebaut werden kann, und wobei ein Umfangsabschnitt (7) sich quer zum Hauptkörper (6) erstreckt und ausgelegt ist, um einen Anschlagwiderlager beim Einsetzen des becherförmigen Elements (4) in das jeweilige Loch (3) zu definieren, wobei die Löcher (3) zu den jeweiligen becherförmigen Elemente (4) gegensätzlich geformt sind, **dadurch gekennzeichnet, dass** die becherförmigen Elemente (4) in die jeweiligen Löcher (3) eingebaut sind, so dass der äußerste Teil der becherförmigen Elemente (4) bündig mit der Außenfläche des blattartigen Elements (2) ist.

2. Plattform (1) nach Anspruch 1, wobei die Löcher (3) eine Tiefe (p) aufweisen, die kleiner oder gleich einer Dicke (s) des blattartigen Elements (2) ist.

3. Plattform (1) nach Anspruch 1 oder 2, wobei sich das Umfangselement (7) in einem oberen Abschnitt des becherförmigen Elements (4) befindet, wobei das becherförmige Element durch Interferenz mit dem jeweiligen Loch (3) verbunden oder gekoppelt ist.

4. Plattform (1) nach einem oder mehreren der vorhergehenden Ansprüche, wobei der Aufnahmeabschnitt eines jeden becherförmigen Elements (4) von einer oberen Öffnung (6b) des becherförmigen Elements (4) zugänglich ist und wobei der Umfangsabschnitt (7) eines jeden becherförmigen Elements (4) eine nach außen gerichtete Erstreckung des Hauptkörpers (6) an der oberen Öffnung (6b) definiert, wobei der Umfangsabschnitt (7) vorzugsweise in einem entsprechenden Fräsen (3a) des jeweiligen Lochs (3) untergebracht ist.

5. Plattform (1) nach einem oder mehreren der vorhergehenden Ansprüche, wobei die Löcher (3) und ein jedes becherförmige Element (4) einen kreisförmigen Querschnitt aufweisen und wobei der Umfangsabschnitt (7) mit der Form eines ringförmigen Flansches hergestellt ist.

6. Plattform (1) nach einem oder mehreren der vorhergehenden Ansprüche, umfassend mindestens ein zusätzliches Loch (8), das durch die gesamte Dicke des blattartigen Elements (2) verläuft und das mit einer jeweiligen Verankerungsvorrichtung (9), die auf die untere Fläche des blattartigen Elements (2) anwendbar ist, assoziiert werden kann.

7. Rückhaltesystem (10) für Transportfahrzeuge, umfassend:
- eine Plattform (1) nach einem oder mehreren der vorhergehenden Ansprüche;
- mindestens eine Teleskop-Sperrstange (5) mit einem eigenen Endteil (5a), der so konfiguriert ist, dass er mit einem jeweiligen becherförmigen Element (4) gekoppelt ist, wobei der Endteil (5a) eine Querschnittsreduzierung aufweist, die eine untere Schulter (11b) definiert, aus der ein Verriegelungsvorsprung (11) herausragt, so dass der Endteil (5a) mit dem jeweiligen becherförmigen Element (4) gekoppelt werden kann, durch:
- Auflegen des freien Endes (11a) des Verriegelungsvorsprungs (11) gegen eine Bodenfläche (13) des Aufnahmeabschnitts (6a) des becherförmigen Elements (4) und/oder
- Auflegen der Schulter (11b) gegen eine obere Fläche (7a) des becherförmigen Elements (4) und gleichzeitig Einsetzen des Verriegelungsvorsprungs (11) in den Aufnahmeabschnitt (6a).

8. Rückhaltesystem (10) nach Anspruch 7, wobei der Verriegelungsvorsprung (11) durch einen Stopfen mit einer Höhe (h) definiert ist, die größer als eine Tiefe (p1) des Aufnahmeabschnitts (6a) ist, so dass das freie Ende (11a) des Verriegelungsvorsprungs (11) an der Bodenfläche (13) des Aufnahmeabschnitts (6a) des becherförmigen Elements (4) anliegt.

9. Rückhaltesystem (10) nach Anspruch 7, wobei der Verriegelungsvorsprung durch einen Stopfen (12a) mit einer Höhe (h) definiert ist, die kleiner als eine Tiefe (p1) des Aufnahmeabschnitts (6a) ist, so dass die Schulter (11b) bei gleichzeitigem Einsetzen des Verriegelungsvorsprungs (11) in den Aufnahmeabschnitt (6a) gegen die obere Fläche des becherförmigen Elements (4) stößt.

## Revendications

1. Plateforme (1) destinée à être installée sur un plan de chargement (C) d'un véhicule de transport, comprenant un élément en forme de plaque (2) adapté pour reposer sur ledit plan de chargement (C) et comportant une pluralité de trous (3) disposés selon une répartition prédéterminée, ladite plateforme (1) comprenant de plus, pour chaque trou (3), un élément en forme de tasse (4) relatif comprenant un corps principal (6) définissant une partie de réception (6a), dans laquelle une partie d'extrémité (5a) d'une barre de blocage télescopique (5) peut être montée, et une partie périphérique (7) se prolongeant transversalement au corps principal (6) et adaptée pour définir une butée d'arrêt lors de l'introduction de l'élément en forme de tasse (4) dans le trou respectif (3),
dans laquelle lesdits trous (3) sont de forme opposée par rapport aux éléments en forme de tasse (4) respectifs, **caractérisée en ce que** lesdits éléments en forme de tasse (4) sont montés dans les trous respectifs (3) de sorte que la partie la plus externe des éléments en forme de tasse (4) se trouve au ras de la surface externe de l'élément en forme de plaque (2).

2. Plateforme (1) selon la revendication 1, dans laquelle lesdits trous (3) ont une profondeur (p) inférieure ou égale à une épaisseur (s) dudit élément en forme de plaque (2).

3. Plateforme (1) selon la revendication 1 ou 2, dans laquelle ledit élément périphérique (7) est situé dans une partie supérieure dudit élément en forme de tasse (4), ledit élément en forme de tasse étant collé ou couplé par interférence au trou respectif (3).

4. Plateforme (1) selon une ou plusieurs des revendications précédentes, dans laquelle la partie de réception de chaque élément en forme de tasse (4) est accessible depuis une embouchure supérieure (6b) de l'élément en forme de tasse (4) et dans laquelle la partie périphérique (7) de chaque élément en forme de tasse (4) définit une extension vers l'extérieur du corps principal (6) en correspondance de ladite embouchure supérieure (6b) ; ladite partie périphérique (7) étant de préférence logée à l'intérieur d'un fraisage (3a) correspondant dudit trou respectif (3).

5. Plateforme (1) selon une ou plusieurs des revendications précédentes, dans laquelle lesdits trous (3) et chaque élément en forme de tasse (4) comportent une section circulaire, et dans laquelle ladite partie périphérique (7) est réalisée sous la forme d'une bride annulaire.

6. Plateforme (1) selon une ou plusieurs des revendications précédentes, comprenant au moins un trou supplémentaire (8), traversant toute l'épaisseur de l'élément en forme de plaque (2) et pouvant être associé à un dispositif d'ancrage (9) respectif applicable à la surface inférieure de l'élément en forme de plaque (2).

7. Système de retenue (10) pour véhicules de transport, comprenant :
- une plateforme (1) selon une ou plusieurs des revendications précédentes ;
- au moins une barre de blocage télescopique (5) comprenant sa propre partie d'extrémité (5a) configurée pour être couplée à un élément en forme de tasse (4) respectif, ladite partie d'extrémité (5a) comportant une réduction de section définissant un épaulement inférieur (11b) à partir duquel une saillie de verrouillage (11) dépasse, de sorte que ladite partie d'extrémité (5a) peut être couplée à l'élément en forme de tasse (4) respectif à travers :
- faire reposer l'extrémité libre (11a) de ladite saillie de verrouillage (11) contre une surface de fond (13) de la partie de réception (6a) de l'élément en forme de tasse (4) et/ou
- appuyer ledit épaulement (11b) contre une surface supérieure (7a) dudit élément en forme de tasse (4) et introduire simultanément la saillie de verrouillage (11) dans ladite partie de réception (6a).

8. Système de retenue (10) selon la revendication 7, dans lequel ladite saillie de verrouillage (11) est définie par un bouchon ayant une hauteur (h) étant supérieure à une profondeur (p1) de la partie de réception (6a) de sorte que l'extrémité libre (11a) de ladite saillie de verrouillage (11) repose contre la surface de fond (13) de la partie de réception (6a) de l'élément en forme de tasse (4).

9. Système de retenue (10) selon la revendication 7, dans lequel ladite saillie de verrouillage est définie par un bouchon (12a) ayant une hauteur (h) étant inférieure à une profondeur (p1) de la partie de réception (6a) de sorte que ledit épaulement (11b) se met en butée contre la surface supérieure de l'élément en forme de tasse (4) avec l'introduction simultanée de la saillie de verrouillage (11) dans la partie de réception (6a).
